# DEMANDE DE BREVET EUROPEEN

(11) **EP 1 254 818 A2**
(43) Date de publication de la demande: **06.11.2002**
(21) Numéro de dépôt: 02291113.5
(22) Date de dépôt: 03.05.2002
(51) Int. Cl.: B60T 7/10, B60T 13/74, G05G 1/02

(54) **Dispositif de commande électrique, notamment pour frein de stationnement de véhicule automobile**

(30) Priorité: 04.05.2001 FR 0105956
(71) Demandeur: Renault s.a.s., 92100 Boulogne Billancourt (FR)
(72) Inventeur: Petit, Gérard, 78290 Croissy S/Seine (FR); Quertinmont, Jean-Luc, 78460 Chevreuse (FR)
(74) Mandataire: Hagel, Francis

(57) **Abrégé**

Le dispositif de commande électrique (10) comprend une manette d'actionnement (12) mobile montée dans un guide stationnaire (18) en va-et-vient dans une première direction sous l'action d'un ressort de rappel (42) et dans une direction opposée sous une action manuelle, des moyens de détection (52, 56) de la course de la manette (12) et délivrant un signal correspondant vers une unité de traitement et de commande, et des moyens de blocage/déblocage (58) à actionnement manuel, pour bloquer la manette mobile (12) par rapport au guide stationnaire (18) et la débloquer vis-à-vis de celui-ci.
Les moyens de blocage/déblocage (58) comprennent un bouton-poussoir (62) porté par la manette (12) mobile et coopérant avec un mécanisme bistable (70) assurant le blocage de la manette (12) dans sa position lors d'un premier actionnement du mécanisme bistable, et assurant le déblocage de la manette depuis sa position lors d'un nouvel actionnement du mécanisme bistable.

## Description

L'invention concerne un dispositif de commande électrique, notamment pour un frein de stationnement dans un véhicule automobile, qui comprend une manette d'actionnement montée mobile dans un guide stationnaire, en va-et-vient dans une première direction sous l'action d'un ressort de rappel et dans une direction opposée sous une action manuelle, et des moyens de détection de la course de la manette fournissant un signal correspondant à une unité de traitement et de commande, et des moyens de blocage/déblocage à actionnement manuel, pour bloquer la manette mobile par rapport au guide stationnaire et la débloquer vis-à-vis de celui-ci.

Dans un nombre croissant d'automobiles, on utilise des freins de stationnement dits électriques, qu'il convient de commander avec des dispositifs de commande électrique correspondants.

Les solutions techniques existantes en la matière font appel pour la plupart à des moteurs électriques et des capteurs d'effort qui transforment l'effort exercé sur la commande de frein en signal électrique transmis au système de freinage. La gestion de la progressivité du freinage est souvent complexe et coûteuse du fait qu'elle nécessite une électronique complexe. De plus, ces systèmes n'offrent qu'une restitution partielle des sensations de freinage (intensité, progressivité, blocage). Les systèmes proposés n'utilisent pas toutes les possibilités que pourraient offrir la transmission et le traitement électronique des données de freinage, tout en conservant pour l'utilisateur des sensations "mécaniques" de freinage.

Un autre aspect important lors de la conception des dispositifs de commande électrique pour de tels freins de stationnement électrique, est de garantir une sécurité à l'encontre d'une libération inopinée du frein de stationnement, par exemple lorsqu'une personne non autorisée déclenche cette libération par erreur.

Dans le but de pallier ces inconvénients, dans un dispositif de commande électrique du type énoncé en introduction, l'invention prévoit que les moyens de blocage comprennent bouton-poussoir porté par la manette mobile et coopérant avec un mécanisme bistable assurant le blocage de la manette dans sa position lors d'un premier actionnement du mécanisme bistable, et assurant le déblocage de la manette depuis sa position lors d'un nouvel d'actionnement du mécanisme bistable.

Selon d'autres caractéristiques :
- le mécanisme bistable est un mécanisme du type "push-on/push-off" ;
- le mécanisme bistable comprend un organe d'entrée susceptible d'effectuer des mouvements en va-et-vient dans une direction longitudinale du dispositif et un organe de sortie susceptible d'effectuer des mouvements de rotation dans un sens et dans l'autre autour de cet axe longitudinal ;
- l'organe de sortie du mécanisme bistable est susceptible d'effectuer des mouvements de 1/4 de tour dans un sens et dans l'autre ;
- les moyens de blocage/déblocage comprennent au moins un loquet commandé par l'organe de sortie du mécanisme bistable ;
- le loquet est une plaque en forme de secteur de cercle autour d'un axe perpendiculaire à l'axe longitudinal du dispositif et écarté de celui-ci, le loquet comportant une denture en secteur de cercle en engrènement avec une crémaillère portée par l'organe de sortie du mécanisme bistable autour de l'axe longitudinal ;
- le loquet comporte un ergot dirigé sensiblement en éloignement de l'axe longitudinal, et le guide stationnaire comporte au moins une lumière dans laquelle peut venir s'engager l'ergot ;
- la manette comprend une partie d'actionnement destinée à être actionnée à la main, un cadre de forme générale aplatie et rectangulaire, solidaire de la partie d'actionnement, et un goujon solidaire du cadre et dirigé à l'opposé de la partie d'actionnement dans la direction de l'axe, et il est prévu un ressort de rappel interposé entre le goujon et une traverse du guide stationnaire ;
- le guide stationnaire comprend deux bras longitudinaux portés par la traverse à la manière des bras d'un U, assurant un guidage pour deux côtés longitudinaux du cadre de la manette ;
- il est prévu un commutateur actionné par le mécanisme bistable ;
- il est prévu une diode électroluminescente dans le bouton-poussoir, raccordée électriquement au commutateur ;
- le guide stationnaire est destiné à être fixé à la structure d'un véhicule et à l'intérieur du tableau de bord de celui-ci, de manière que la partie d'actionnement de la manette et le bouton-poussoir soient sensiblement en affleurement avec un habillage du tableau de bord ;
- la manette porte un doigt attaquant un curseur d'un potentiomètre fixé sur le guide stationnaire et susceptible d'être raccordé à une unité de traitement et de commande de freinage ;
- la partie d'actionnement de la manette comporte un bec conformé de manière à être saisi avec les doigts repliés d'une main ;
- la ou les lumières(s) est(sont) ménagée(s) dans une plaquette séparée rapportée par fixation sur le guide stationnaire ;
- il est prévu deux loquets sensiblement symétriques par rapport à l'axe longitudinal du dispositif.

D'autres caractéristiques et avantages de l'invention apparaîtront à la lecture de la description détaillée qui suit, pour la compréhension de laquelle on se reportera aux dessins annexés, dans lesquels :
- la figure 1 est une vue en perspective d'un dispositif de commande selon l'invention ;

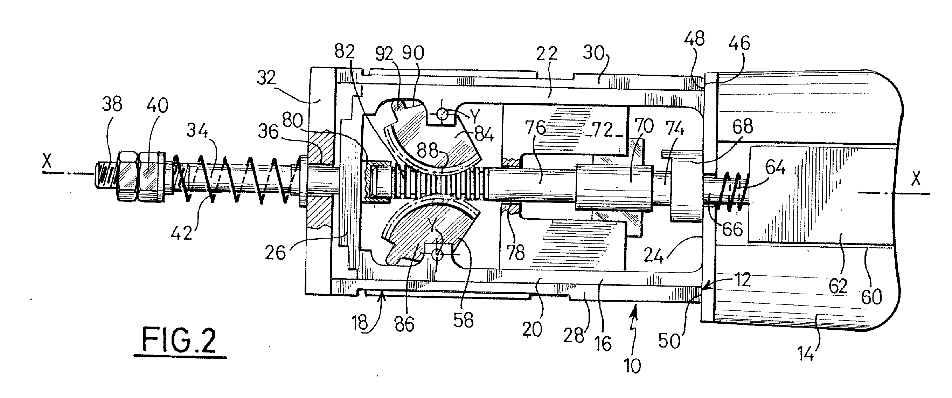

- la figure 2 est une vue de dessus et avec arrachements partiels du dispositif de la figure 1 ; et
- la figure 3 est une vue, sensiblement coupe longitudinale, du dispositif des figures 1 et 2.

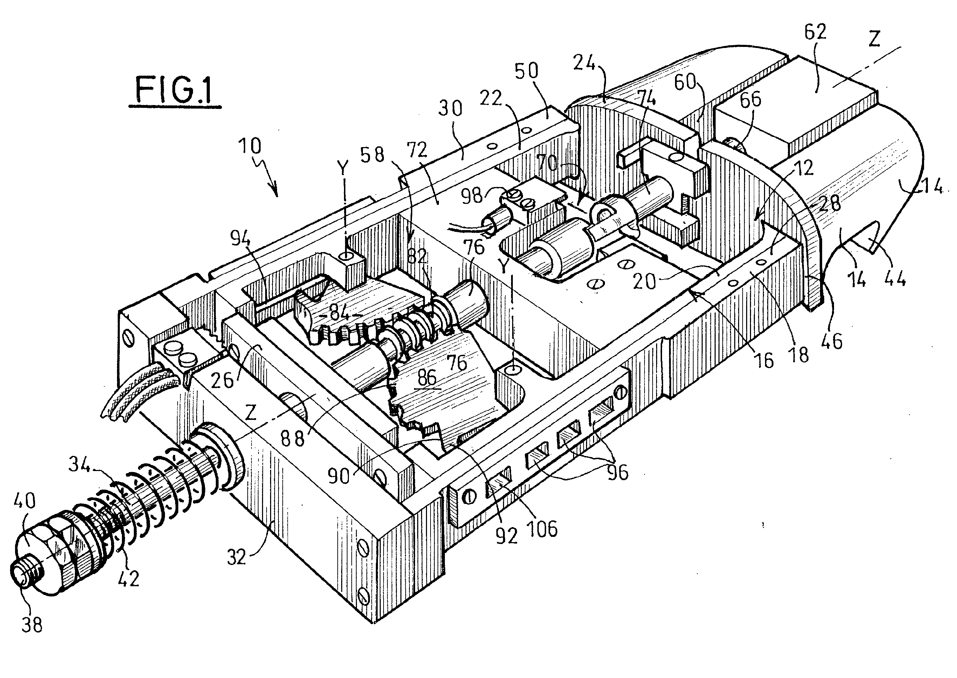

Le dispositif de commande 10, illustré en perspective dans son ensemble dans la figure 1, comprend une manette 12, composée elle-même essentiellement d'une partie d'actionnement 14 et d'un cadre 16 de forme aplatie et sensiblement rectangulaire, et un guide 18, en forme générale de U, tel que le cadre 16 de la manette 12 s'y déplace à la manière d'un tiroir. Plus précisément, le cadre 16 comprend deux côtés ou montants longitudinaux 20 et 22 et deux côtés ou montants transversaux 24 et 26. La partie d'actionnement 14 de la manette 12 est fixée au montant transversal 24, et on peut même prévoir que ces deux éléments ne fassent qu'une seule pièce.

Le guide 18 comprend deux bras 28 et 30, qui forment les deux côtés de la forme en U, et une traverse 32 qui en forme le fond. Les montants longitudinaux 20 et 22 du cadre 16 coulissent le long des bras 28 et 30 du guide 18 en va-et-vient le long d'un axe longitudinal général X-X, de sorte que le montant transversal 26 de la manette 12 s'éloigne ou se rapproche de la traverse 32 du guide 18.

Sur le montant transversal 26 du cadre 16 de la manette 12 est fixé un goujon fileté 34, orienté suivant l'axe X-X, qui traverse librement un trou 36 de la traverse 32 du guide 18. Sur l'extrémité 38 du goujon 34 est fixé un groupe écrou/contre écrou 40, et un ressort de rappel 42 est maintenu prisonnier entre le groupe écrou/contre écrou 40 et la traverse 32 du guide.

La partie d'actionnement 14 de la manette 12 est conformée sur l'un de ses côtés, et de préférence sur son côté inférieur, de manière à présenter un bec 44, tel que l'on peut saisir la manette 12 à l'aide des doigts d'une main, en les repliant légèrement autour du bec 44, et la tirer en comprimant le ressort de rappel 42 en direction de l'axe X-X vers la droite à la figure 1.

En l'absence d'effort manuel, la manette 12 est ramenée par le ressort 42 en position de repos illustrée à cette figure, dans laquelle des épaulements de butée 46 aménagés sur le montant transversal 24 du cadre 16 viennent buter contre les extrémités 48 et 50 des bras 28 et 30 du guide 18.

Le cadre 16 de la manette 12 porte un doigt 52 qui attaque le curseur d'un potentiomètre 56 fixé sur le guide 18 stationnaire. Les déplacements du cadre 16 sont ainsi transformés en déplacements du curseur et en variations corrélatives de la résistance aux bornes du potentiomètre 56, et cette information est envoyée à une unité de traitement et de commande (non représentée) qui l'exploite pour commander le système de freinage de stationnement du véhicule dans lequel est monté le dispositif de commande 10 ici décrit.

Il s'agit de circuits de commande classiques connus de l'homme de métier, qui n'ont pas besoin d'être décrits ici plus en détail. On observera toutefois ici que l'on prévoit avantageusement deux doigts 52 et deux potentiomètres 56, ce qui assure une redondance nécessaire pour maximiser la fiabilité et la sécurité du système.

Le dispositif de commande 10 comprend encore un dispositif de blocage/déblocage 58 qui va maintenant être décrit.

La partie d'actionnement 14 de la manette 12 comporte un logement 60 qui reçoit un bouton-poussoir 62 capable de s'y déplacer, également dans le sens de l'axe X-X, sur une courte distance à l'encontre d'un ressort de rappel 64. Le bouton-poussoir 62 porte une tige 66 qui dépasse à l'intérieur du cadre 16 de la manette 12 et l'extrémité 68 intérieure de la tige 66 coopère ici avec un mécanisme bistable 70, dit aussi mécanisme "push-on/push-off", ou "pousser/pousser" en évocation à son mode de fonctionnement.

Ce mécanisme est monté sur une poutre transversale 72 qui traverse le cadre 16 sensiblement au milieu, et il comprend un organe d'entrée 74 attaqué par la tige 66 du bouton-poussoir 62, et un organe de sortie 76, sous la forme d'un arbre disposé suivant l'axe X-X et monté à rotation dans deux paliers 78 et 80, l'un dans la poutre 72 et l'autre dans le montant transversal 26 du cadre 16. L'arbre 76 porte une crémaillère circulaire et libre en rotation 82 dans la zone entre les deux paliers 78 et 80.

Deux loquets 84 et 86 sont montés dans le cadre 16 de part et d'autre de l'arbre 76. Comme ces deux loquets sont symétriques par rapport à l'axe X-X, on se contentera de décrire le loquet 84. Il se présente sous la forme d'une plaque en forme de secteur de cercle ou de disque, autour d'un axe Y-Y perpendiculaire à l'axe X-X de la manette 12, et écarté de celui-ci.

Sur son côté convexe en secteur de cercle, le loquet 84 présente une denture 88 qui engrène avec la crémaillère circulaire 82 de l'arbre 76.

Le côté 90 du loquet opposé au mécanisme 70 porte un ergot latéral 92 qui, suite à une rotation du loquet 84 autour de l'axe Y-Y, se déplace généralement en éloignement de l'axe X-X et perpendiculairement au montant longitudinal 20 du cadre 16, qu'il traverse sans empêchement à travers une ouverture 94.

Sur ce même côté, le bras 28 du guide 18 comporte plusieurs lumières 96, ici au nombre de quatre, et lorsque la rotation du loquet 84 se poursuit, l'ergot 92 vient s'engager dans l'une de ces lumières, selon la position axiale momentanément occupée par le cadre 16.

Le mécanisme 70 est tel qu'une action sur le bouton 62, c'est-à-dire un enfoncement à l'encontre du ressort 64 suivi d'un relâchement du bouton 62, se traduit par une rotation de 1/4 de tour de l'organe de sortie/arbre 76 dans un sens. Une nouvelle action (pousser/relâcher) sur le bouton-poussoir 62 va se traduire par une rotation de 1/4 de tour de l'arbre 76 dans le sens contraire.

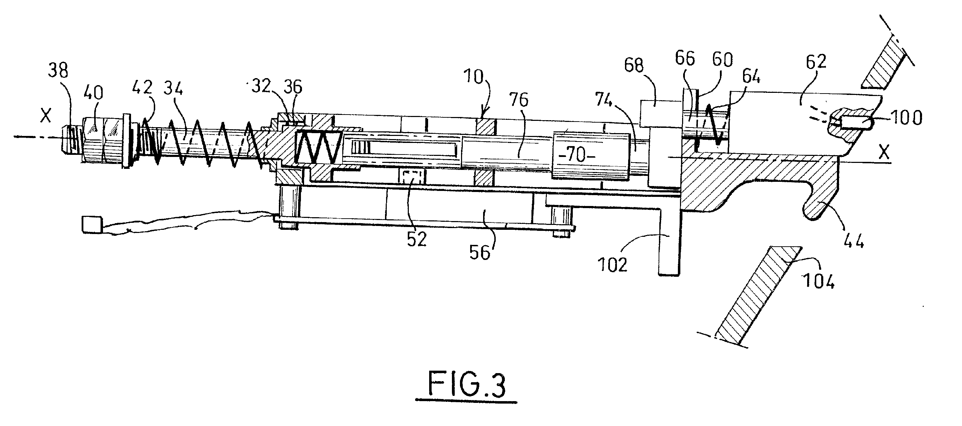

On voit à la figure 1 qu'un commutateur 98 est associé au mécanisme 70. Le commutateur 98 peut être raccordé à l'unité de traitement et de commande précédemment évoquée, en particulier à des fins de signalisation ou d'avertissement. Avantageusement, on prévoit une lampe sous la forme d'une diode électroluminescente 100 (figure 3) logée dans le bouton 62 et alimentée via le commutateur 98, afin d'indiquer l'état du mécanisme 70, et par conséquent l'état du mécanisme de blocage/déblocage 58.

Le pas de la crémaillère 82 et celui de la denture 88 sont ainsi choisie pour que cette rotation de 1/4 de tour de l'arbre 76 se traduise par une rotation du loquet 84 autour de l'axe Y-Y, d'un angle suffisant soit pour amener l'ergot 92 en engagement dans une lumière 96, soit pour faire sortir l'ergot 92 hors de la lumière 96 dans laquelle il se trouvait.

Pour terminer cette partie de la description, on se reportera de nouveau à la figure 3, sur laquelle on a montré de manière schématique que l'ensemble du dispositif 10 est fixé à la structure du véhicule, ici symbolisée par une patte de support 102, à l'intérieur du tableau de bord et en partie basse de celui-ci, de telle sorte que, en position de repos, la manette 14 et le bouton 62 sont sensiblement en affleurement avec l'habillage du tableau de bord, ici symbolisé par la référence 104.

On va maintenant décrire le fonctionnement du dispositif, en commençant par définir comme position au départ - ou position de repos - celle qui est illustrée sur les figures et dans laquelle la manette 12 et son cadre 16 sont repoussés par le ressort 42 agissant sur le goujon fileté 34 vers la gauche, jusqu'à ce que les épaulements 46 du côté transversal 24 viennent buter contre les extrémités 48 et 50 des bras 28 et 30 du guide en U 18.

La position angulaire de l'arbre 76 à la sortie du mécanisme "push-push" 70 est telle que les loquets 84 et 86 sont tournés en direction de la manette 12, que leur côté 90 est éloigné du montant longitudinal 20, ou 22 du cadre 16, et que leur ergot 92 est dégagé des lumières 96 des bras 28 et 30. Dans cette position, le commutateur 98 est ouvert et la diode 100 est éteinte. De plus, les curseurs des potentiomètres 56 sont à une extrémité de leur course, et le signal correspondant est évalué dans l'unité de traitement et de commande de freinage comme indiquant une "absence de freinage".

Si le conducteur désire appliquer le frein de stationnement, il saisit par l'extrémité de ses doigts le bec 44 de la manette 12 et la tire, vers la droite sur les figures, en surmontant la force du ressort 42. Le mouvement de l'ensemble "manette 14 + cadre 16 + goujon 34" se traduit par un mouvement du curseur 52 du potentiomètre 56 et le signal correspondant est évalué dans l'unité de traitement et de commande de freinage comme signifiant un ordre de "application du frein de stationnement", et ceci avec une intensité proportionnelle à la course du curseur du potentiomètre 56, et donc proportionnelle à la course de la manette 12. Étant donné que le ressort 42 se comprime, le conducteur ressent du fait de la résistance croissante du ressort 42 une force de réaction sensiblement proportionnelle à l'action de freinage ainsi déclenchée.

Pendant ce déplacement, le mécanisme de blocage/déblocage 58 s'est déplacé conjointement avec la manette 12 et avec le cadre 16, et la situation de ces éléments par rapport à la manette 12 et au cadre 16 n'a pas changé, c'est-à-dire que le commutateur 98 reste ouvert et la diode 100 est éteinte, et que les loquets 84 et 86 restent orientés en direction de la manette 14, de sorte que les ergots 92 restent rétractés vers l'intérieur et dégagés hors des lumières 96.

Si l'intention du conducteur était simplement d'utiliser le frein de stationnement comme frein de secours, une fois son action couronnée de succès, il lui suffit de relâcher la manette 12 qui va revenir spontanément en position de repos sous l'effort du ressort de rappel 42.

Par contre, si l'intention du conducteur est de bloquer le frein de stationnement dans son état appliqué, il complète son action de traction sur la manette 14 par une action de poussée sur le bouton-poussoir 62. Comme déjà expliqué, il va résulter de cette action que les loquets 84 et 86 sont amenés à pivoter en éloignement de la manette et que leur ergot 92 est déplacé vers l'extérieur jusqu'à atteindre une des lumières 96 et s'y engager.

Une fois l'ergot 92 engagé dans une lumière 96, l'ensemble manette 14-cage 16 reste bloqué par rapport au guide 18 dans cette position, et le frein de stationnement reste appliqué sous la force d'application correspondante. Selon la traction qui a été exercée par le conducteur sur la manette 14, et donc selon la course imposée à celle-ci, l'ergot 92 va s'engager dans une lumière 96 plus ou moins éloignée de la traverse 32 du guide 18, et la force d'application du frein de stationnement sera différente.

Si l'ergot 92 ne se trouve pas exactement face à une lumière 96, on prévoit de former l'ergot 92 avec une extrémité arrondie, ce qui amorcera son entrée dans la lumière 96 la plus voisine. L'entrée complète de l'ergot 92 dans la lumière aura lieu lorsque le conducteur relâche la manette 14, qu'il n'a en effet plus besoin de retenir étant donné que l'engagement de l'ergot 92 dans la lumière 96 empêche le retour de l'ensemble manette 14-cage16 vers la gauche.

L'action sur le bouton-poussoir 62 a actionné le commutateur 98, ce qui allume la diode 100. Le conducteur dispose alors de deux informations visuelles :
1) la manette 14 dépasse hors de l'habillage du tableau de bord 104 ; ceci signifie que le frein est serré ;
2) la diode 100 est allumée ; ceci signifie que le blocage est actif.

Pour desserrer le frein de stationnement, le conducteur doit combiner deux actions : en premier lieu, il doit tirer sur la manette 14, de nouveau en agrippant son bec 44, puis actionner une nouvelle fois le bouton-poussoir 62.

Comme il a déjà été décrit, cette nouvelle action sur le bouton-poussoir 62 déclenche le mécanisme "push-push 70" qui fait tourner l'arbre 76 sur 1/4 de tour en sens inverse, dont résulte un pivotement des loquets 84 et 86 en retour, et une sortie de l'ergot 92 hors de la lumière 96. La diode 100 s'éteint. Le conducteur relâche la manette 14 qui revient dans sa position sensiblement en affleurement avec l'habillage 104 du tableau de bord, et l'ensemble du dispositif 10 est revenu dans sa position de repos.

La combinaison des mouvements est nécessaire parce qu'une simple action sur le bouton-poussoir 62, sans tirer sur la manette 14, n'est pas capable de faire sortir le l'ergot 92 hors de la lumière 96. En effet, la force de rappel exercée par le ressort 42 est totalement encaissée par coincement de l'ergot 92 latéralement contre le bord postérieur de la lumière 96, et la force disponible en sortie du mécanisme "push-push 70" est de loin insuffisante pour vaincre ce coincement.

Cela représente un facteur de sécurité important. En effet, il pourrait se produire qu'une personne autre que le conducteur, comme par exemple un enfant, s'avise par jeu d'appuyer sur le bouton-poussoir 62, dont la diode 100 est en effet allumée, mais cette manoeuvre ne pourra pas aboutir à un desserrage du frein de stationnement.

Pour le conducteur, l'ensemble du dispositif présente une disposition particulièrement ergonomique. Compte tenu de l'implantation dans le tableau de bord, la traction sur la manette 14 aura lieu dans une direction physiologiquement naturelle. De plus, la traction sur la manette 14 va mobiliser uniquement les quatre doigts de l'index à l'auriculaire, et le conducteur dispose encore de son pouce afin de pousser sur le bouton-poussoir 62, également dans une direction physiologique naturelle.

L'ensemble des pièces nécessaires peut être fabriqué à des coûts raisonnables, d'autant plus que le guidage du cadre 16 en longueur dans le guide 18 est relativement insensible aux tolérances. La fiabilité du dispositif est en particulier excellente grâce à la réalisation sensiblement symétrique par rapport à l'axe longitudinal X-X, ce qui le rend peu sujet aux coincements.

Une adaptation à divers modèles de véhicules est possible de façon très simple. Il suffit de réaliser, à partir d'un modèle de mécanisme unique, à chaque fois un groupe manette 14 - bouton-poussoir 62 dont les formes, les matières, et les couleurs sont adaptées à celle de l'habillage de tableau de bord 104 du véhicule concerné. Le cas échéant, l'adaptation pourra concerner le ressort de rappel 42, soit qu'on le remplace par un autre, soit que l'on modifie son tarage à l'aide du groupe écrou/contre écrou 40.

On remarquera enfin que les lumières 96 sont ménagées non pas directement dans le matériau des bras 28 et 30 du guide 18, mais dans des plaquettes rapportées 106 (figure 1). On pourra ainsi prévoir des plaquettes spécifiques par modèle de véhicule, offrant un nombre différent de positions de blocage, et/ou un échelonnement différent de ces positions de blocage.

## Revendications

1. Dispositif de commande électrique (10), notamment pour frein de stationnement de véhicule automobile, comprenant une manette d'actionnement (12) montée mobile dans un guide stationnaire (18) en va-et-vient dans une première direction sous l'action d'un ressort de rappel (42) et dans une direction opposée sous une action manuelle, des moyens de détection (52, 56) de la course de la manette (12) et fournissant un signal correspondant à une unité de traitement et de commande, et des moyens de blocage/déblocage (58) à actionnement manuel, destinés à bloquer la manette mobile (12) par rapport au guide stationnaire (18) et à la débloquer vis-à-vis de celui-ci,
**caractérisé en ce que** les moyens de blocage (58) comprennent un bouton-poussoir (62) porté par la manette (12) mobile et coopérant avec un mécanisme bistable (70) assurant le blocage de la manette (12) dans sa position lors d'un premier actionnement du mécanisme bistable, et assurant le déblocage de la manette depuis sa position lors d'un nouvel actionnement du mécanisme bistable.

2. Dispositif selon la revendication 1, **caractérisé en ce que** le mécanisme bistable (70) est un mécanisme du type "push on-push off".

3. Dispositif selon la revendication 2, **caractérisé en ce que** le mécanisme bistable (70) comprend un organe d'entrée (74) susceptible d'effectuer des mouvements en va-et-vient dans une direction longitudinale (X-X) du dispositif (10) et un organe de sortie (76) susceptible d'effectuer des mouvements de rotation dans un sens et dans l'autre autour de cet axe longitudinal (X-X).

4. Dispositif selon la revendication 3, **caractérisé en ce que** l'organe de sortie (76) du mécanisme bistable (70) est susceptible d'effectuer des mouvements de 1/4 de tour dans un sens et dans l'autre.

5. Dispositif selon l'une ou l'autre des revendications 3 et 4, **caractérisé en ce que** les moyens de blocage/déblocage (58) comprennent au moins un loquet (84, 86) commandé par l'organe de sortie (76) du mécanisme bistable (70).

6. Dispositif selon la revendication 5, **caractérisé en ce que** le loquet (84, 86) est une plaquette en forme de secteur de cercle autour d'un axe (Y-Y) perpendiculaire à l'axe longitudinal (X-X) du dispositif (10) et écarté de celui-ci, le loquet (84, 86) comportant une denture (88) en secteur de cercle en engrènement avec une crémaillère (82) portée par l'organe de sortie (76) du mécanisme bistable (70) autour de l'axe longitudinal (X-X).

7. Dispositif selon la revendication 6, **caractérisé en ce que** le loquet (84) comporte un ergot (92) dirigé sensiblement en éloignement de l'axe longitudinal (X-X), et **en ce que** le guide stationnaire (18) comporte au moins une lumière (96) dans laquelle peut venir s'engager l'ergot (92).

8. Dispositif selon l'une quelconque des revendications précédentes, **caractérisé en ce que** la manette (12) comprend une partie d'actionnement (14) destinée à être actionnée à la main, un cadre (16) de forme générale aplatie et rectangulaire, solidaire de la partie d'actionnement (14), et un goujon (34) solidaire du cadre (16) et dirigé à l'opposé de la partie d'actionnement (14) dans la direction de l'axe (X-X), et **en ce qu'**il est prévu un ressort de rappel (42) interposé entre le goujon (34) et une traverse (32) du guide stationnaire (18).

9. Dispositif selon la revendication 8, **caractérisé en ce que** le guide stationnaire (18) comprend deux bras longitudinaux (28, 30) portés par la traverse (32) à la manière des bras d'un U, assurant un guidage pour deux côtés longitudinaux (20, 22) du cadre (16) de la manette (12).

10. Dispositif selon l'une quelconque des revendications précédentes, **caractérisé en ce qu'**il est prévu un commutateur (98) actionné par le mécanisme bistable (70).

11. Dispositif selon la revendication 10, **caractérisé en ce qu'**il est prévu une diode électroluminescente (100) dans le bouton-poussoir (62), raccordée électriquement au commutateur (98).

12. Dispositif selon l'une quelconque des revendications précédentes, **caractérisé en ce que** le guide stationnaire (18) est destiné à être fixé (102) à la structure d'un véhicule et à l'intérieur du tableau de bord de celui-ci, de manière que la partie d'actionnement (14) de la manette (12) et le bouton-poussoir (62) soient sensiblement en affleurement avec un habillage (104) du tableau de bord.

13. Dispositif selon l'une quelconque des revendications précédentes, **caractérisé en ce que** la manette (12) porte un doigt (52) attaquant un curseur d'un potentiomètre (56) fixé sur le guide stationnaire (18) et susceptible d'être raccordé à une unité de traitement et de commande de freinage.

14. Dispositif selon l'une quelconque des revendications précédentes, **caractérisé en ce que** la partie d'actionnement (14) de la manette (12) comporte un bec (44) conformé de manière à être saisi avec les doigts repliés d'une main.

15. Dispositif selon la revendication 7, **caractérisé en ce que** la ou les lumières(s) est(sont) ménagée(s) dans une plaquette (106) séparée rapportée par fixation sur le guide stationnaire (18).

16. Dispositif selon la revendication 5, ou l'une au moins des revendications qui en dépendent, **caractérisé en ce qu'**il est prévu deux loquets (84, 86) sensiblement symétriques par rapport à l'axe longitudinal (X-X) du dispositif (10).
